Europäisches Patentamt

European Patent Office

Office européen des brevets

(19)

(11) Veröffentlichungsnummer : **0 449 779 A2**

(12) **EUROPÄISCHE PATENTANMELDUNG**

(21) Anmeldenummer : 91810206.2

(22) Anmeldetag : 22.03.91

(51) Int. Cl.$^5$ : **B29C 53/56, B29D 23/00**

(30) Priorität : 30.03.90 CH 1061/90

(43) Veröffentlichungstag der Anmeldung :
02.10.91 Patentblatt 91/40

(84) Benannte Vertragsstaaten :
CH DE ES FR GB IT LI

(71) Anmelder : Ullmann, Martin
Lehweg 13
CH-9030 Abtwil (CH)

(72) Erfinder : Ullmann, Martin
Lehweg 13
CH-9030 Abtwil (CH)

(74) Vertreter : Gachnang, Hans Rudolf
Badstrasse 5 Postfach 323
CH-8501 Frauenfeld (CH)

(54) Verfahren und Vorrichtung zur Herstellung eines Hohlkörpers.

(57)    Ein die Flechtmaschine verlassender, schlauchförmiger Mantel wird über einen als Form dienenden Dorn (13) geführt und dabei das Geflecht (9) des Mantels aufgeschmolzen. Anschliessend wird durch eine Kühlvorrichtung (21) die vom Dorn (13) vorgegebene Querschnittsform erhärtet. Der Dorn (13) kann eine veränderbare Querschnittsform aufweisen. Damit kann der Querschnitt des entstehenden Rohres kontinuierlich verändert werden.

## FIG. 1

EP 0 449 779 A2

Gegenstand der vorliegenden Erfindung ist ein Verfahren und eine Vorrichtung zur Herstellung eines Hohlkörpers aus Kunststoff gemäss Oberbegriff des Patentanspruches 1.

Gegenstand der Erfindung ist weiter ein nach dem Verfahren hergestellter Hohlkörper.

Zur Verstärkung des Mantels von Rohren aus Kunststoff wird häufig Textilmaterial in Gestalt von parallel verlaufenden Fasern oder Faserbändern oder ein Schlauch aus geflochtenen, gewebten oder gestrickten Fasern verwendet.

Bei einem solchen aus der deutschen Offenlegungsschrift 28 18 576 bekannten Verfahren wird ein den Mantel des Rohres verstärkendes Textilmaterial aus thermoplastischen Fäden mit der Aussenfläche des pressgeformten Rohres verschmolzen. Dazu muss die Aussenfläche weichgemacht und das Textilmaterial um die noch weiche Aussenfläche gewickelt werden. Die Herstellung von pressgeformten Rohren erfordert der Rohrform entsprechende Kerne, welche nach der Pressung mühsam entfernt werden müssen. Rohre mit veränderlichem Querschnitt, insbesondere mit zentralen Abschnitten von grösserem Querschnitt als an den Enden, lassen sich auf diese Weise nicht herstellen. Zudem ist das nachträgliche Aufbringen und Verschmelzen eines textilen Mantels aufwendig und mit einem zusätzlichen Arbeitsgang verbunden.

Aus der deutschen Offenlegungsschrift 31 06 273 ist weiter ein Rohrkörper aus faserverstärktem Kunststoff bekannt, bei dem auf einen ovalen, vierkantigen oder runden Formkörper Bänder aus parallelliegenden Fasersträngen oder einzelne parallelliegende Faserstränge aus Kunststoffasern, Aramidfasern oder einer Kombination aus beiden Faserarten aufgelegt und mit Kunststoff getränkt sind. Auch dieser Rohrkörper bedingt einen Kern, auf den die Fasern aufgewickelt werden können, und auf welchem die Tränkung der Fasern mit Kunstharz und die Aushärtung erfolgen kann.

Es ist auch bereits bekannt, z.B. Schläuche für die Bewässerung mit einem geflochtenen Mantel herzustellen und das Textilgeflecht in einem Extrudiervorgang mit einer Gummischicht zu überziehen derart, dass der textile Mantel als Armierung und die Gummischicht als dichtendes Material dient.

Bei allen oben genannten bekannten Verfahren zur Herstellung eines Rohres werden textile Bänder oder Gewebe über einen bereits erzeugten Rohrkörper gewickelt oder gezogen oder anschliessend mit diesem durch Vergiessen oder eine Wärmebehandlung verbunden. Für die Herstellung solcher Rohre sind immer mehrere, sich folgende Arbeitsgänge notwendig. Rohre mit Querschnittsveränderungen, bei welchen der grösste Querschnitt nicht an einem der Enden liegt, z.B. doppelkonische Rohre, lassen sich mit den bekannten Verfahren nicht erzeugen.

Hier will die Erfindung Abhilfe schaffen.

Die Erfindung, wie sie in den Ansprüchen gekennzeichnet ist, löst die Aufgabe, ein Verfahren und eine Vorrichtung zu schaffen, mit welchem Rohre und Hohlkörper hergestellt werden können, deren Querschnitt sowohl bezüglich der geometrischen Querschnittsform als auch bezüglich der Querschnittsfläche kontinuierlich oder stufenweise veränderbar ist.

Mit dem erfindungsgemässen Verfahren und der Vorrichtung gelingt es, ohne Verwendung eines später zu entfernenden Kernes auch kontinuierlich Rohre und Hohlkörper zu erzeugen. Die Hohlkörper und Rohre können aus einem Geflecht oder aus einem innenliegenden, die Armierung bildenden Geflecht und einem über oder unter dem Geflecht angeordneten niedrigschmelzenden zweiten Geflecht oder einer Folie bestehen, die kontinuierlich geschmolzen und mit dem innenliegenden Geflecht verbunden wird. Wenn nur ein Teil der Filamente des Mantels aus einem niedrigschmelzenden Kunststoff bestehen und der andere Teil aus hochschmelzendem, z.B. Aramidfasern, so verschmilzt das niedrigschmelzende Fasermaterial bei der Wärmebehandlung zu einer geschlossenen Haut, welche die nichtschmelzenden, die Armierung bildenden Fasern umschliesst. Es ist auch möglich, ein nichtschmelzendes Geflecht sofort nach seiner Erzeugung an der Flechtscholle mit flüssigem Kunststoff zu tränken und auszuhärten und gleichzeitig den Querschnitt zu verändern.

Mit einem entsprechend geformten Dorn können auch gebogene armierte und unarmierte Rohre mit konstantem oder nicht konstantem Querschnitt hergestellt werden.

Anhand illustrierter Ausführungsbeispiele wird die Erfindung näher erläutert. Es zeigen:

Figur 1 eine schematische Darstellung einer Seilflechtmaschine einer ringförmigen Flechtscholle,

Figur 2 eine schematische Darstellung eines Dornes zur Herstellung eines gebogenen Rohres,

Figur 3 einen Querschnitt durch ein Profil,

Figur 4 eine schematische Darstellung einer Flechtmaschine mit einer die Stränge erwärmenden Heizvorrichtung und

Figur 5 eine schematische Darstellung einer Flechtmaschine mit einer Klebstoffzuführung.

Auf einer herkömmlichen Flechtmaschine 1 zum Flechten des Mantels von Seilen und dergl. mit auf einer umlaufenden Bahn zirkulierenden Mehrzahl von Klöppeln 3 und einer Flechtscholle 5, in welcher die Fäden 7 von den Klöppeln 3 zusammengeführt und miteinander zu einem schlauchförmigen Geflecht 9 geflochten werden, ist auf einem durch das Zentrum der ringförmigen Flechtscholle 5 hindurchragenden Arm 11 ein Formdorn 13 aufgesetzt, dessen Querschnittsform und Querschnittsfläche fest oder mittels entsprechenden, hier nicht näher beschriebenen Spreizelementen im wesentlichen beliebig veränderbar ist. Der Formdorn 13 kann in Transportrichtung des Geflechtes 9 gesehen innerhalb der ersten Flechtscholle 5 oder vor oder innerhalb einer zweiten Flechtscholle 15 mit einer festen oder veränderlichen Durchgangsöffnung 17 angeordnet sein. Auch die erste Flechtscholle 5 kann Mittel aufweisen, mit denen ihr Durchgangsquerschnitt 9 veränderbar ist. In der Flechtscholle 5 und/oder dem Formdorn 13 und/oder der zweiten Flechtscholle 15 können Heizelemente angeordnet sein, mit denen deren Kontaktfläche mit dem sich bildenden bzw. gebildeten Geflecht 9 erwärmbar, und das Geflecht 9 erweichbar oder schmelzbar ist.

Hinter der Flechtscholle 5 ist eine den fertig geflochtenen Mantel im wesentlichen vollständig umschliessende Kühlvorrichtung 21 angeordnet, mittels welcher dieser sehr schnell bis zur Erstarrung abgekühlt werden kann.

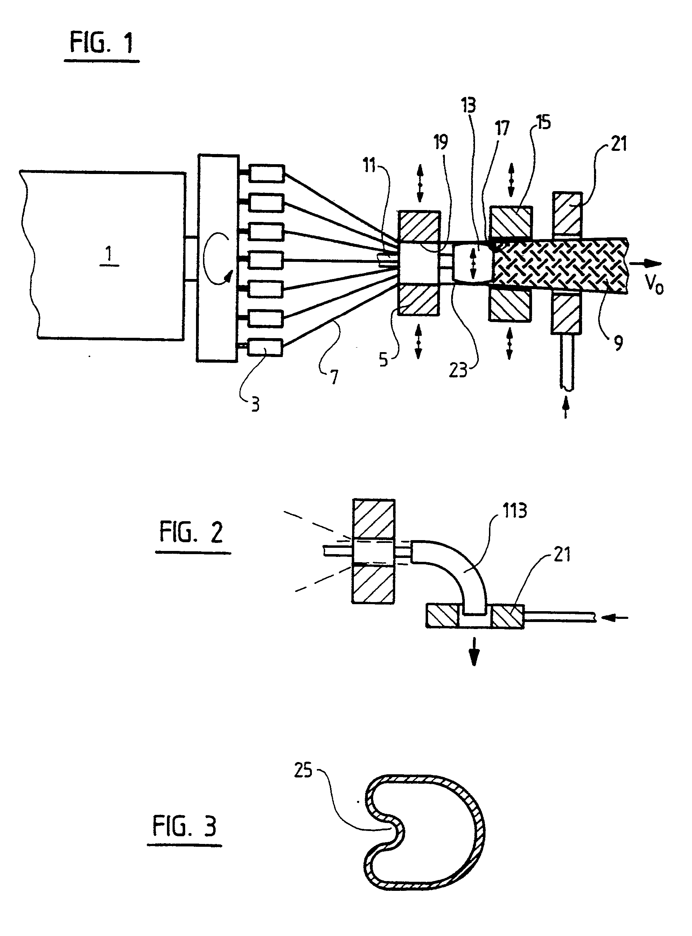

Im folgenden wird anhand von vier Beispielen die Herstellung von Hohlkörpern verschiedenster Formen auf der in Figur 1 gezeigten Vorrichtung beschrieben, bei denen ein geflochtener Mantel durch eine anschliessende Wärmebehandlung verfestigt wird.

Beispiel 1 (Verfahren zur Herstellung eines zylindrischen Rohres)

Zum Herstellen eines zylindrischen Rohres mit aus einem Geflecht 9 aus Kunstfasern bestehenden Mantel wird auf der Flechtmaschine 1 in herkömmlicher Weise ein schlauchförmiger Mantel geflochten. Da keine den Mantel tragende Seele durch das Zentrum der Flechtscholle 5 zugeführt wird, wird der hohle Mantel über die Oberfläche des Formdornes 13 geführt und von diesem gestützt und in gewünschter Form gehalten. Ein Teil der von den Klöppeln 3 zugeführten Fäden oder Filamentbündel 7 besteht aus einem thermoplastischen, niedrigschmelzenden Kunststoff. Die übrigen Fäden oder Filamente 7 können aus einem hochschmelzenden Kunststoff oder aus Metall bestehen. Durch Beheizen der Oberfläche 19 der Flechtscholle 5 und/oder der Oberfläche 23 des Dornes 13 werden die niedrigschmelzenden Fasern erweicht oder geschmolzen und verbinden sich untereinander und mit den hochschmelzenden oder nichtschmelzenden übrigen Fasern und bilden je nach Art und Dichte des Geflechtes 9 eine homogene oder gitterförmige Wandung. Das teilweise klebrige oder flüssige Material des Geflechtes 9 wird sofort durch kalte Luft abgekühlt und erstarrt in der durch die Oberfläche des Dornes 13 und allenfalls zusätzlich durch die Querschnittsform der zweiten Flechtscholle 15 kalibrierten Querschnittsform. Bei der Erzeugung eines zylindrischen Rohres sind selbstverständlich die Querschnitte des Dornes 13 und der Flechtscholle 15 unveränderlich und bilden zusammen einen ringförmigen, die Rohrwandung bildenden Spalt. Je nach Materialwahl und der Festigkeit der nichtschmelzenden Faseranteile ergibt sich ein starres Rohr, das im Anschluss an die Flechtmaschine 1 in Stücke aufgeteilt werden muss, oder es ergibt sich ein elastisches Rohr, das als Ring gewickelt werden kann.

Anstelle von niedrigschmelzenden Fasern oder zusätzlich kann von innen oder aussen auf den frisch geflochtenen Mantel flüssiger oder pulverförmiger Kunststoff aufgebracht und mit dem Geflecht verschmolzen und anschliessend gehärtet werden.

Beispiel 2 (Herstellung eines konischen Rohres)

Zur Herstellung eines konischen Rohres wird eine Flechtscholle 5 benötigt, deren Durchgangsquerschnitt kontinuierlich veränderbar ist. Auch der Querschnitt des Dornes 13 - wenn ein solcher eingesetzt wird - muss synchron dazu veränderbar sein. Während des Flechtvorganges werden der Durchgangsquerschnitt an der Flechtscholle 5 und der Querschnitt des Dornes 13 sukzessive vergrössert derart, dass das austretende Geflecht 9 sukzessive einen grösseren Querschnitt erhält. Gleichzeitig wird, wie im Beispiel 1, durch Zuführen von Wärme mindestens ein Teil der Fasern erweicht oder auch geschmolzen, so dass eine gegenseitige Verbindung der einzelnen Fasern entsteht, die anschliessend nach dem Verlassen der beiden Führungsmittel durch Abkühlen verfestigt wird. Damit die Dichte des Geflechtes mit zunehmendem Durchmesser nicht abnimmt, wird die Abzugsgeschwindigkeit $V_o$ bei gleichbleibender Drehzahl der Klöppel 3 verringert. Durch den geringeren Steigungswinkel im Geflecht kann dessen Gewicht pro Flächeneinheit konstant gehalten werden.

Wenn das zu erzeugende Rohr im Anschluss an den konischen Abschnitt einen zylindrischen aufweisen soll, so kann durch Konstanthalten der Querschnitte der Flechtscholle 5 und des Dornes 13 der zylindrische Abschnitt erzeugt werden. Durch sukzessives Verringern des Querschnittes der beiden Führungsmittel kann auch ein sich verjüngender Abschnitt gebildet werden. Durch Erhöhen der Abzugsgeschwindigkeit in Richtung auf den kleiner werdenden Querschnitt kann wiederum die Dichte des Mantelgeflechtes konstant gehalten werden.

Beispiel 3 (Herstellung eines Hohlkörpers)

Analog zu den oben beschriebenen Beispielen kann durch kontinuierliches Verändern der Querschnitte der Flechtscholle 5 und des Dornes 13 allenfalls unter Zuhilfenahme einer zweiten Flechtscholle 15, bzw. eines Kalibrierringes ein Hohlkörper erzeugt werden, dessen Anfang und Ende vollständig verschlossen sind oder nur eine sehr geringe Querschnittsöffnung aufweisen, indem die zweite Flechtscholle zu Beginn und am Ende des zu erzeugenden Hohlkörpers das die Flechtmaschine verlassende Geflecht 9 vollständig oder annähernd vollständig zusammenpresst.

Beispiel 4 (Herstellung eines gebogenen Rohres)

Für die Herstellung eines gebogenen Rohres wird ein bogenförmiger Dorn 113 verwendet, über den das weiche Geflecht 9 gezogen, darauf erhitzt und sofort noch über dem Dorn 113 oder im Anschluss daran abgekühlt wird (siehe Figur 2).

Anhand der Beispiele 5 bis 7 wird die Herstellung von Hohlkörpern aus Bändern oder Strängen beschrieben, welche vor dem Zusammenführen auf einem Formdorn durch eine Wärmebehandlung erweicht worden sind.

Von einer Flechtmaschine 1 werden Bänder oder Faserstränge 7 einem Formwerkzeug, z.B. einer Flechtscholle 5 oder einem Formdorn 13 zugeleitet und durch eine Heizvorrichtung 27 vor dem Auftreffen auf das Formwerkzeug erwärmt, derart, dass die zusammengeführten Stränge eine gegenseitige Verbindung eingehen. Die Kühlvorrichtung, die im oder am Formwerkzeug im Anschluss an die Heizung 27 angeordnet ist, bewirkt sofort eine unlösbare Erstarrung der miteinander verklebten Stränge in der vom Formwerkzeug dem rohrförmigen Mantel aufgezwungenen Querschnittsform. Die Heizvorrichtung 27 kann als Strahlungsheizung oder als Kontaktheizung ausgebildet sein.

Beispiel 5 (Herstellung eines zylindrischen Rohres)

Von der Flechtmaschine 1 führen die Stränge 7 aus thermoplastischen Fasern zum Formwerkzeug 13 und werden auf dessen innerer Führungsfläche zusammengeführt. Innerhalb oder ausserhalb der einen Kegelmantel bildenden Stränge 7 ist eine Heizung 27 angeordnet, die die Stränge 7 mindestens soweit erweicht, dass eine innige gegenseitige Verbindung entsteht, wenn die Stränge 7 auf dem Formwerkzeug 5 übereinander geführt werden. Durch eine intensive Kühlung der Oberfläche des Formwerkzeuges 5 erstarrt das zuvor erreichte Material und verharrt in der Querschnittsform des Formwerkzeuges 5.

Beispiel 6 (Herstellung eines Hohlkörpers mit abnehmender Querschnittsfläche)

Analog zur Herstellung eines zylindirschen Rohres werden die Stränge 7 erwärmt und zum Formwerkzeug 13 geführt. Durch sukzessive Querschnittsverkleinerung der Führungsfläche am Formwerkzeug verringert sich auch der Querschnitt des erzeugten Rohres, wobei die Querschnittsverringerung bis zum völligen Verschluss des Hohlkörpers gehen kann. Wie bereits im Beispiel 2 angeführt, kann durch Verändern der Abzugsgeschwindigkeit die Dichte und die Dicke der Wand variiert werden.

Beispiel 7

Anstelle der aufgeschmolzenen thermoplastischen Fasern können die dem Formwerkzeug 13 zugeführten Stränge mit einem Klebstoff beschichtet und auf dem Formwerkzeug durch eine Wärmebehandlung in der vorgegebenen Form erhärtet werden.

Anstelle einer Flechtmaschine 1 kann auch eine Wickelmaschine treten, von der anschmelzbare oder erweichbare Kunststoffbänder auf die äussere Führungsfläche eines Formwerkzeuges 13 gewickelt und dort durch Abkühlen unlösbar verbunden werden.

Durch die Beimengung von nicht oder hochschmelzenden Fasern können die erzeugten Hohlkörper beliebig armiert werden.

In den Beispielen 1 bis 4 sind Rohre bzw. Hohlkörper beschrieben worden, deren Wandungen aus einem Geflecht 9 bestehen, bei dem mindestens ein Teil der das Geflecht bildende Fasern aufgeschmolzen worden ist. Anstelle des Aufschmelzens der Fasern oder zusätzlich dazu besteht die Möglichkeit, beim Flechten eine Folie mit niedrigem Schmelzpunkt parallel zur Flechtrichtung oder schraubenlinienförmig einlaufen zu lassen und in der Flechtscholle 5 bzw. über dem Dorn 13 aufzuschmelzen und mit dem Geflecht 9 zu verbinden. Dabei kann das Geflecht 9 ganz oder teilweise aus nichtschmelzenden Fasern bestehen.

In einer weiteren Ausgestaltung der Erfindung kann auch oder nur von aussen über das Geflecht schraubenlinienförmig oder parallel zur Abzugsrichtung eine Folie aufgebracht und mit dem Geflecht durch die Flechtscholle 5 gezogen und dort mit dem Geflecht verbunden werden. Selbstverständlich kann anstelle einer niedrigschmelzenden Folie auch eine solche verwendet werden, welche nicht aufschmilzt oder nur eine innige Verbindung mit den aufschmelzenden Fasern des Geflechtes eingeht. Durch Aufbringen von Folien können sehr glatte Oberflächen des Rohres oder spezifische chemische oder physikalische Eigenschaften erreicht werden. Anstelle einer Folie kann auf das Geflecht auch flüssiger oder pulverförmiger Kunststoff aufgebracht werden.

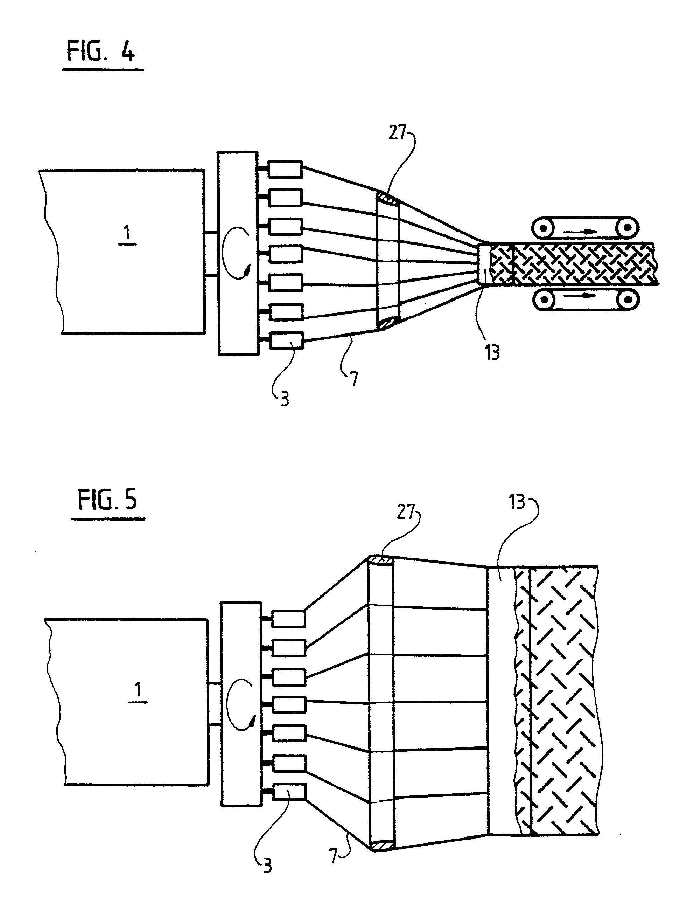

Es sind im wesentlichen alle Querschnittsformen denkbar, und zwar auch solche, welche eine oder mehrere nutförmige Einbuchtungen 25 aufweisen (Figur 3).

Nicht nur zur Erzeugung einer konstanten Wandstärke kann die Abzugsgeschwindigkeit des Geflechtes 9 verändert werden, sondern es können beispielsweise durch Reduktion der Abzugsgeschwindigkeit bestimmte Bereiche der Rohre mit einer höheren oder - bei Erhöhung der Abzugsgeschwindigkeit - niedrigeren Festigkeit ausgestattet werden.

**Patentansprüche**

1. Verfahren zur Herstellung eines Hohlkörpers aus Kunststoff, dadurch gekennzeichnet, dass ein oder mehrere Bänder oder Stränge aus Kunststoff kontinuierlich einer Form (13) zugeführt und dort unlösbar miteinander verbunden werden.

2. Verfahren nach Anspruch 1, die Bänder oder Stränge (7) vor der gegenseitigen Berührung erwärmt und angeschmolzen oder erweicht werden.

3. Verfahren nach Anspruch 1, dadurch gekennzeichnet, dass die Bänder oder Stränge (7) vor dem oder beim Zusammenführen auf der Form (13) mit einem Klebstoff versetzt werden.

4. Verfahren nach einem der Ansprüche 1 oder 2, dass die auf der Form (13) zusammengeführten, miteinander zu einem schlauchförmigen Körper verbundenen Bänder oder Stränge (7) durch Abkühlen auf der Form in der durch diese vorgegebenen Gestalt verfestigt werden.

5. Verfahren nach einem der Ansprüche 1 bis 4, dadurch gekennzeichnet, dass auf einer Seilmantel-Flechtmaschine oder auf einer Umwickelmaschine die von Vorratsspulen (3) der Form (13) zulaufenden Bänder oder Stränge (7) erwärmt werden und auf der Form 13) oder nach Verlassen der Form abgekühlt werden.

6. Verfahren nach einem der Ansprüche 1 bis 5, dadurch gekennzeichnet, dass die Querschnittsform und/oder die Querschnittsfläche der Form (13) während der Herstellung des Hohlkörpers stufenweise oder kontinuierlich veränderbar ist.

7. Verfahren nach einem der Ansprüche 1 bis 6, dadurch gekennzeichnet, dass durch Variieren der Abzugsgeschwindigkeit die Wandstärke des Hohlkörpers veränderbar ist.

8. Vorrichtung zur Durchführung des Verfahrens nach Anspruch 1 mit einer Flecht- oder Wickelmaschine, dadurch gekennzeichnet, dass zwischen den Vorratsspulen (3) auf der Flechtmaschine (1) und der als Form (13) dienenden Flechtscholle (5) ein Heizelement (27) zum Erwärmen der der Form (13) zulaufenden Bänder oder Stränge (7) angeordnet ist.

9. Vorrichtung nach Anspruch 8, dadurch gekennzeichnet, dass die Form (13) eine Kühlungsvorrichtung aufweist.

10. Vorrichtung nach einem der Ansprüche 8 oder 9, dadurch gekennzeichnet, dass die Erwärmung durch eine Strahlungs- und/oder eine Kontaktheizung (27) erfolgt.

11. Vorrichtung nach einem der Ansprüche 8 bis 10, dadurch gekennzeichnet, dass die Form (113) bogenförmig ausgebildet und der Abzug des Hohlkörpers in einem Winkel zum Einlauf der Bänder oder Stränge (7) auf die Form (113) erfolgt.

12. Rohr oder Hohlkörper, hergestellt nach dem Verfahren gemäss Anspruch 1.

FIG. 1

FIG. 2

FIG. 3

6

## FIG. 4

## FIG. 5